# EUROPÄISCHE PATENTSCHRIFT

(11) **EP 3 256 366 B1**
(45) Veröffentlichungstag und Bekanntmachung des Hinweises auf die Patenterteilung: **02.09.2020**
(21) Anmeldenummer: 16703273.9
(22) Anmeldetag: 22.01.2016
(51) Int. Cl.: B62D 15/02, G08G 1/14

(54) **VERFAHREN ZUM BETREIBEN EINES FAHRZEUGS**
METHOD TO OPERATE A VEHICLE
PROCÉDÉ POUR OPÉRER UN VÉHICULE

(30) Priorität: 12.02.2015 DE 102015202468
(43) Veröffentlichungstag der Anmeldung: 20.12.2017
(73) Patentinhaber: Robert Bosch GmbH, 70442 Stuttgart (DE)
(72) Erfinder: NORDBRUCH, Stefan, 70806 Kornwestheim (DE); MIELENZ, Holger, 73760 Ostfildern (DE)
(86) Internationale Anmeldenummer: PCT/EP2016/051330
(87) Internationale Veröffentlichungsnummer: WO 2016/128202

(56) Entgegenhaltungen:
- EP-A2- 2 316 709
- DE-A1-102013 213 379
- US-A1- 2010 156 672

## Beschreibung

Die Erfindung betrifft ein Verfahren zum Betreiben eines Fahrzeugs. Die Erfindung betrifft ferner ein Fahrzeug sowie ein Computerprogramm.

### Stand der Technik

Die Offenlegungsschrift EP 2 316 709 A2 zeigt ein Kraftfahrzeug nach dem Oberbegriff des Anspruchs 1, eine externe Steuerungsvorrichtung sowie ein Verfahren zum Durchführen eines Ausparkvorgangs eines Kraftfahrzeugs.

Die Offenlegungsschrift DE 10 2012 222 562 A1 zeigt ein System für bewirtschaftete Parkflächen zur Überführung eines Fahrzeugs von einer Startposition in eine Zielposition.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Wenn ein geparktes Fahrzeug beladen werden soll, so kann es einen Aufwand bedeuten, dass das Ladegut zum Fahrzeug transportiert werden muss. Dieser Transport kann zum Beispiel einen Verkehr auf dem Parkplatz stören. Ferner kann das Fahrzeug beispielsweise auch in einem für Personen abgesperrten Bereich geparkt sein, der nur für autonom fahrende Fahrzeuge reserviert ist. Somit kann es zum Beispiel nicht zulässig sein, dass eine Person zum Fahrzeug läuft, um es zu beladen. Auch kann es zu kritischen Situationen kommen, wenn eine Person auf dem Weg zum parkenden Fahrzeug auf autonom fahrende Fahrzeuge trifft. Denn eine Interaktion mit einem Fahrer ist nicht möglich, um eventuell kritische Situationen zu entschärfen, zum Beispiel mittels Handzeichen. Offenbarung der Erfindung

Die der Erfindung zugrunde liegende Aufgabe kann daher darin gesehen werden, ein effizientes Konzept zum Betreiben eines Fahrzeugs bereitzustellen, mittels welchen eine sichere Beladung des Fahrzeugs bewirkt werden kann und welches die bekannten Nachteile überwindet.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Fahrzeugs bereitgestellt, wobei das an einer Parkposition eines Parkplatzes abgestellte Fahrzeug autonom von der Parkposition zu einer Beladestation geführt und an der Beladestation autonom abgestellt wird, so dass das Fahrzeug an der Beladestation beladen werden kann.

Gemäß einem weiteren Aspekt wird ein Fahrzeug bereitgestellt, das eingerichtet ist, das Verfahren zum Betreiben eines Fahrzeugs durchzuführen oder auszuführen.

Nach noch einem Aspekt wird ein Computerprogramm bereitgestellt, welches Programmcode zur Durchführung des Verfahrens zum Betreiben eines Fahrzeugs umfasst, wenn das Computerprogramm auf einem Computer ausgeführt wird.

Die Erfindung umfasst also insbesondere den Gedanken, dass das Fahrzeug autonom zu der Beladestation von seiner Parkposition geführt wird. Das heißt also, dass eine Person nicht mehr selbst zum Fahrzeug laufen muss, um dieses zu beladen. Dadurch kann in vorteilhafter Weise bewirkt werden, dass ein Verkehr auf dem Parkplatz durch diese Person nicht gestört wird. Insbesondere kann ein Beladen effektiv und effizient durchgeführt werden, insofern für die Person, die das Fahrzeug beladen sollte, eine Zeitersparnis bewirkt ist. Denn in der Zeit, in welcher die Person zum Fahrzeug laufen müsste, um dieses zu beladen, kann die Person andere Dinge erledigen. Denn das Fahrzeug fährt selbst zu der Beladestation.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Autonom im Sinne der vorliegenden Erfindung bedeutet insbesondere, dass das Fahrzeug selbstständig, also ohne einen Eingriff eines Fahrers, auf dem Parkplatz navigiert oder fährt oder geführt wird. Das Fahrzeug fährt also selbstständig auf dem Parkplatz, ohne dass ein Fahrer hierfür das Fahrzeug steuern müsste. Ein Führen umfasst insbesondere eine Quer- und/oder eine Längsführung des Fahrzeugs. Ein solch autonomes fahrendes Fahrzeug, das automatisch ein- und ausparken kann, wird beispielsweise als ein AVP-Fahrzeug bezeichnet. AVP steht für "automatic valet parking" und kann mit "automatischer Parkvorgang" übersetzt werden. Fahrzeuge, die diese AVP-Funktionalität nicht aufweisen, werden beispielsweise als normale Fahrzeuge bezeichnet.

Nach einer Ausführungsform ist vorgesehen, dass die Beladestation vom Parkplatz umfasst ist. Das heißt also, dass die Beladestation beispielsweise innerhalb des Parkplatzes angeordnet ist.

In einer weiteren Ausführungsform ist vorgesehen, dass das Fahrzeug beladen wird. Insbesondere wird das Fahrzeug manuell und/oder automatisch beladen.

Gemäß der Erfindung ist vorgesehen, dass das Fahrzeug nach einem Beladen autonom zurück zur gleichen Parkposition oder zu einer anderen Parkposition des Parkplatzes geführt und dort autonom abgestellt wird. Dadurch wird insbesondere der technische Vorteil bewirkt, dass das Fahrzeug die Beladestation nach dem Beladen nicht länger blockiert. Dadurch, dass das Fahrzeug autonom zurück zur gleichen Parkposition oder zu der anderen Parkposition geführt und dort autonom abgestellt wird, wird insbesondere der technische Vorteil bewirkt, dass für diesen Vorgang keine menschlichen Ressourcen übermäßig in Anspruch genommen werden müssen.

In einer anderen Ausführungsform ist vorgesehen, dass das beladene und an der entsprechenden Parkposition abgestellte Fahrzeug nach einem Ende einer vorbestimmten Parkzeit und/oder nach Empfang eines Startsignals über ein Kommunikationsnetzwerk autonom von der entsprechenden Parkposition zu einer Zielposition des Parkplatzes geführt und dort autonom abgestellt wird, an welcher das Fahrzeug von einer Person abgeholt werden kann.

Dadurch wird insbesondere der technische Vorteil bewirkt, dass die Person an der Zielposition des Parkplatzes das Fahrzeug abholen kann. Da das Fahrzeug an der Zielposition von der Person abgeholt werden kann, kann die Zielposition auch als eine Abholposition bezeichnet werden.

Gemäß einer weiteren Ausführungsform ist vorgesehen, dass das Fahrzeug autonom von einer Startposition des Parkplatzes zu der Parkposition geführt und dort autonom abgestellt wird, bevor es von der Parkposition autonom zu der Beladestation geführt wird.

Dadurch wird insbesondere der technische Vorteil bewirkt, dass ein Fahrer des Fahrzeugs sein Fahrzeug an der Startposition abstellen kann und anschließend das Fahrzeug verlassen kann. Der Fahrer des Fahrzeugs muss sich also nicht mehr darum kümmern, dass das Fahrzeug an der Parkposition geparkt wird. In der Zeit, in welcher dieser autonome Parkvorgang durchgeführt wird, kann der Fahrer des Fahrzeugs andere Dinge erledigen. Er kann somit seine Zeit effizient und effektiv nutzen.

Da der Fahrer des Fahrzeugs sein Fahrzeug an der Startposition des Parkplatzes abstellt, damit das Fahrzeug anschließend autonom zu der Parkposition geführt und dort autonom abgestellt wird, kann die Startposition auch als eine Abgabeposition bezeichnet werden.

In einer Ausführungsform ist vorgesehen, dass die Startposition identisch mit der Zielposition ist. Das heißt also insbesondere, dass der Fahrer sein Fahrzeug an der gleichen Stelle oder an der gleichen Position abholt, an welcher er sein Fahrzeug vor dem autonomen Parkvorgang abgestellt hat.

In einer anderen Ausführungsform ist vorgesehen, dass die Startposition verschieden von der Zielposition ist.

In einer Ausführungsform ist vorgesehen, dass die Beladestation verschieden von der Startposition ist.

In einer Ausführungsform ist vorgesehen, dass die Beladestation verschieden von der Zielposition ist.

In einer Ausführungsform ist vorgesehen, dass die Beladestation sowohl verschieden von der Startposition als auch von der Zielposition ist.

In einer Ausführungsform ist vorgesehen, dass die Startposition in einem Eingangsbereich des Parkplatzes angeordnet ist.

In einer weiteren Ausführungsform ist vorgesehen, dass die Zielposition in einem Ausgangsbereich des Parkplatzes angeordnet ist.

In einer Ausführungsform ist vorgesehen, dass sich der Eingangs- und der Ausgangsbereich des Parkplatzes zumindest teilweise überschneiden. Dies insbesondere dann, wenn Startposition und Zielposition identisch sind.

Gemäß einer weiteren Ausführungsform ist vorgesehen, dass das Fahrzeug erst dann autonom zu der Beladestation geführt wird, wenn über ein Kommunikationsnetzwerk ein entsprechendes Anforderungssignal empfangen wird.

Dadurch wird insbesondere der technische Vorteil bewirkt, dass der Zeitpunkt, zu welchem das Fahrzeug zu der Beladestation fahren soll, bestimmt werden kann. Denn erst bei Empfangen eines entsprechenden Anforderungssignals wird das Fahrzeug autonom zu der Beladestation geführt.

In einer Ausführungsform ist vorgesehen, dass das Kommunikationsnetzwerk ein WLAN-Netzwerk und/oder ein Mobilfunknetzwerk umfasst.

Gemäß einer weiteren Ausführungsform ist vorgesehen, dass eine Kommunikation über das Kommunikationsnetzwerk verschlüsselt ist respektive wird.

In einer anderen Ausführungsform ist vorgesehen, dass das Anforderungssignal vom Fahrzeug und/oder von einem Parkplatzserver zum Koordinieren von autonomen Fahrten von Fahrzeugen auf dem Parkplatz empfangen wird.

Das heißt also, dass beispielsweise das Fahrzeug das Anforderungssignal über das Kommunikationsnetzwerk empfängt. Ansprechend auf den Empfang fährt dann beispielsweise das Fahrzeug autonom zu der Beladestation.

Das heißt also insbesondere, dass der Parkplatzserver das Anforderungssignal über der Kommunikationsnetzwerk empfängt. Ansprechend auf den Empfang koordiniert der Parkplatzserver vorzugsweise die autonome Fahrt des Fahrzeugs von der Parkposition zu der Beladestation.

Das heißt also, dass nach einer Ausführungsform vorgesehen ist, dass der Parkplatzserver ansprechend auf den Empfang des Anforderungssignals eine autonome Führung des Fahrzeugs von der Parkposition zu der Beladestation koordiniert.

Das Vorsehen eines solchen Parkplatzservers weist insbesondere den technischen Vorteil auf, dass eine besonders effektive und effiziente Führung des Fahrzeugs ermöglicht ist, insofern der Parkplatzserver in der Regel ein besseres und größeres Wissen über einen Verkehr auf dem Parkplatz hat als das Fahrzeug selbst oder eine Person, die das Anforderungssignal gesendet hat.

Gemäß einer weiteren Ausführungsform ist vorgesehen dass, das autonome Führen des Fahrzeugs eine ferngesteuerte Führung des Fahrzeugs umfasst.

Das heißt also insbesondere, dass das Fahrzeug ferngesteuert wird. Das Fahrzeug muss also nicht mehr notwendigerweise selbst Wissen über eine Infrastruktur des Parkplatzes aufweisen, um zu der Beladestation oder zu der Parkposition oder zu der Zielposition zu navigieren. Das Wissen weist beispielsweise der Parkplatzserver auf, der die ferngesteuerte Führung des Fahrzeugs durchführt oder koordiniert. Somit können auch Fahrzeuge, die nicht selbständig ohne externe Hilfe autonom auf einem Parkplatz navigieren können, dennoch autonom zu den einzelnen Positionen geführt werden.

Gemäß einer weiteren Ausführungsform ist vorgesehen, dass das autonome Führen des Fahrzeugs ein Steuern einer Quer- und/oder Längsführung des Fahrzeugs mittels einer fahrzeuginternen Steuerungseinrichtung umfasst. Das heißt also, dass in dieser Ausführungsform das Fahrzeug mittels der fahrzeuginternen Steuerungseinrichtung gesteuert oder geführt wird. Hierbei ist beispielsweise vorgesehen, dass die fahrzeuginterne Steuerungseinrichtung die autonome Führung komplett übernimmt, also ohne eine ferngesteuerte Führung.

In einer Ausführungsform ist vorgesehen, dass das autonome Führen des Fahrzeugs sowohl eine ferngesteuerte Führung des Fahrzeugs als auch ein Steuern einer Quer- und/oder Längsführung des Fahrzeugs mittels einer fahrzeuginternen Steuerungseinrichtung umfasst. Das heißt also insbesondere, dass ein Mischbetrieb vorgesehen sein kann, in welchem das Fahrzeug sowohl ferngesteuert geführt wird als auch mittels der fahrzeuginternen Steuerungseinrichtung geführt wird. So kann das Fahrzeug beispielsweise ohne externe Hilfe, also ohne die ferngesteuerte Führung, ein- oder ausparken an den verschiedenen Positionen. Eine Fahrt auf dem Parkplatz zu oder von den einzelnen Positionen wird aber insbesondere in vorteilhafter Weise mittels der ferngesteuerten Führung durchgeführt.

Gemäß einer weiteren Ausführungsform ist vorgesehen, dass der Parkplatz einem Kaufhaus zugeordnet ist, in welchem Handelsware eingekauft werden kann, so dass an der Beladestation eingekaufte Handelsware in das Fahrzeug beladen werden können. Dadurch wird insbesondere der technische Vorteil bewirkt, dass eine effektive und effiziente Beladung des Fahrzeugs mit eingekaufter Handelsware ermöglicht werden kann. So kann beispielsweise nach einem Einkauf ein Fahrer des Fahrzeugs sein Fahrzeug zu der Beladestation beordern und es dort beladen. Anschließend kann beispielsweise in vorteilhafter Weise der Fahrer des Fahrzeugs seinen Einkauf fortsetzen, währenddessen das Fahrzeug wieder zurück zur gleichen Parkposition oder zu der anderen Parkposition autonom geführt und dort autonom abgestellt wird.

In einer Ausführungsform ist vorgesehen, dass das Fahrzeug autonom von der Abgabeposition zu der Parkposition navigiert oder fährt oder ferngesteuert geführt wird.

In einer weiteren Ausführungsform ist vorgesehen, dass das Fahrzeug autonom in die Parkposition einparkt oder ferngesteuert einparkt.

In einer anderen Ausführungsform ist vorgesehen, dass das Fahrzeug autonom aus der Parkposition ausparkt oder ferngesteuert ausparkt.

Nach einer weiteren Ausführungsform ist vorgesehen, dass das Fahrzeug autonom von der Parkposition zu der Abgabeposition navigiert oder fährt oder ferngesteuert geführt wird.

Die Erfindung wird im Folgenden anhand von bevorzugten Ausführungsbeispielen näher erläutert.

Hierbei zeigen:
Fig. 1 ein Ablaufdiagramm eines Verfahrens zum Betreiben eines Fahrzeugs,
Fig. 2 ein Ablaufdiagramm eines weiteren Verfahrens zum Betreiben eines Fahrzeugs; und
Fig. 3 ein Fahrzeug.

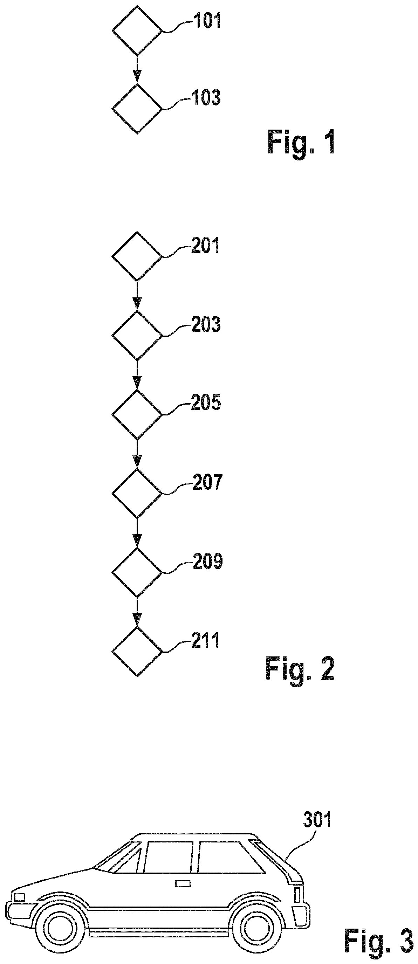

Fig. 1 zeigt ein Ablaufdiagramm eines Verfahrens zum Betreiben eines Fahrzeugs. Gemäß einem Schritt 101 wird das an einer Parkposition eines Parkplatzes abgestellte Fahrzeug autonom von der Parkposition zu einer Beladestation geführt. Gemäß einem Schritt 103 wird das Fahrzeug an der Beladestation autonom abgestellt. Dadurch wird insbesondere der technische Vorteil bewirkt, dass das Fahrzeug an der Beladestation beladen werden kann.

Fig. 2 zeigt ein Ablaufdiagramm eines weiteren Verfahrens zum Betreiben eines Fahrzeugs.

Ein Fahrer des Fahrzeugs stellt sein Fahrzeug an einer Startposition eines Parkplatzes ab. In einem Schritt 201 ist gemäß dem Verfahren vorgesehen, dass das Fahrzeug von der Startposition zu einer Parkposition auf dem Parkplatz autonom geführt wird. In einem Schritt 203 ist vorgesehen, dass das Fahrzeug an der Parkposition autonom abgestellt wird. Das heißt also, dass das Fahrzeug autonom geparkt wird. Dies an der Parkposition.

In einem Schritt 205 ist vorgesehen, dass das an der Parkposition abgestellte Fahrzeug autonom von der Parkposition zu einer Beladestation geführt wird und dort gemäß einem Schritt 207 abgestellt wird. Dies insbesondere autonom, also parkt das Fahrzeug autonom an der Beladestation.

Ein Fahrer kann nun das Fahrzeug beispielsweise mit Handelsware beladen, die er zuvor in einem Kaufhaus eingekauft hat. Nach dem Beladen ist dann gemäß dem Verfahren vorgesehen, dass das Fahrzeug gemäß einem Schritt 209 zurück zu der gleichen Parkposition oder zu einer anderen Parkposition des Parkplatzes geführt und dort gemäß einem Schritt 211 autonom abgestellt wird. Das heißt also, dass das Fahrzeug nach dem Beladen an der gleichen Parkposition oder an der anderen Parkposition geparkt wird.

Fig. 3 zeigt ein Fahrzeug 301, welches eingerichtet ist, das Verfahren zum Betreiben eines Fahrzeugs aus- oder durchzuführen.

Das Fahrzeug 301 umfasst beispielsweise eine Steuerungs- und/oder Führungseinrichtung, die ausgebildet ist, das Fahrzeug autonom auf den Parkplatz zu fahren oder zu führen. Das heißt also insbesondere, dass mittels der Steuerungseinrichtung und/oder der Führungseinrichtung eine autonome Navigation des Fahrzeugs auf dem Parkplatz ermöglicht ist. Die Führungseinrichtung und/oder die Steuerungseinrichtung sind fahrzeuginterne Einrichtungen. Insbesondere steuern und/oder regeln diese Einrichtungen eine Quer- und/oder Längsführung des Fahrzeugs.

Das Fahrzeug 301 umfasst zum Beispiel eine Umfeldsensorik zum Erfassen eines Fahrzeugumfelds. Die autonome Steuerung des Fahrzeugs 301 wird insbesondere basierend auf dem erfassten Fahrzeugumfeld durchgeführt. Eine Umfeldsensorik umfasst zum Beispiel einen oder mehrere der folgenden Umfeldsensoren: Lidarsensor, Lasersensor, Videosensor, Radarsensor und Ultraschallsensor.

In einer Ausführungsform umfasst das Fahrzeug 301 eine Kommunikationsschnittstelle, die ausgebildet ist, Signale über ein Kommunikationsnetzwerk zu empfangen. Solche Signale umfassen beispielsweise Fernsteuerungssignale zwecks einer Fernsteuerung des Fahrzeugs. Signale umfassen beispielsweise Anforderungssignale, dass das Fahrzeug von der Parkposition zu der Beladestation oder zu der Zielposition autonom fahren soll.

Die Erfindung umfasst also insbesondere und unter anderem den Gedanken, ein effizientes Konzept bereitzustellen, mittels welchem eine automatische/autonome Abholung von eingekauften Waren, insbesondere Handelswaren, während und/oder nach einer Shopping oder Einkaufstour in einem Kaufhaus oder in einem Kaufhauskomplex mit einem AVP-Parkhaus/AVP-Parkplatz durchgeführt werden kann. Es sind insbesondere folgende Schritte einzeln oder in Kombination vorgesehen:
Das Fahrzeug wird insbesondere in einem Kaufhaus/Mall/Kaufhauskomplex mit einem Parkplatz/Parkhaus vollautomatisch oder autonom geparkt.

In dem Fall, in welchem der Fahrer oder die Fahrerin etwas eingekauft hat, wird das Fahrzeug nach einer Ausführungsform zu einer Warenausgabestelle (Beladestation) beordert. Dies entweder vom Fahrer oder der Fahrerin und/oder von einem System im Parkhaus, das das Parken und das Einkaufen koordiniert und/oder organisiert (Parkplatzverwaltungsserver).

Das Fahrzeug fährt vorzugsweise autonom von der Parkposition zu der Warenausgabestelle oder zu der Beladestation.

Das Fahrzeug wird insbesondere mit der Ware, insbesondere Handelsware, beladen. Dies beispielsweise durch ein Personal und/oder dem Fahrer oder der Fahrerin.

Nach der Beladung ist beispielsweise vorgesehen, dass der Fahrer oder die Fahrerin das Fahrzeug an der Beladestation oder Warenausgabestelle übernimmt.

Insbesondere ist vorgesehen, dass nach der Beladung das Fahrzeug wieder autonom zurück zu der Parkposition im Parkhaus oder Parkplatz fährt. Insbesondere fährt das Fahrzeug zu einer anderen Parkposition im Parkhaus oder im Parkplatz.

Insbesondere ist vorgesehen, dass, nachdem das Fahrzeug zurück zu der Parkposition oder zu der anderen Parkposition gefahren ist, das Fahrzeug dort autonom parkt. Insbesondere ist nach einer Ausführungsform vorgesehen, dass das beladene und an seiner entsprechenden Parkposition abgestellte oder geparkte Fahrzeug zu einem späteren Zeitpunkt (nach einem Ende des Parkvorgangs und/oder nach Aufforderung von dem Fahrer oder der Fahrerin) entsprechend autonom von der Parkposition zu einer Fahrzeugabgabestelle, beispielsweise einer Zielposition, fährt, sodass der Fahrer oder die Fahrerin das Fahrzeug an dieser Position übernehmen kann.

Nach einer Ausführungsform ist vorgesehen, dass der Beladevorgang durch ein Überwachungssystem überwacht und/oder dokumentiert wird.

Nach einer Ausführungsform ist vorgesehen, dass das Überwachungssystem eine autonome Fahrt des Fahrzeugs auf dem Parkplatz überwacht. Das heißt also, dass das Überwachungssystem beispielsweise eine autonome Fahrt des Fahrzeugs von der Startposition zu der Parkposition, von der Parkposition zu der Beladestation und wieder zurück zu der Parkposition oder zu einer anderen Position und von der Parkposition zu einer Zielposition überwacht.

Das Überwachungssystem umfasst nach einer Ausführungsform eine oder mehrere Videokameras und/oder einen oder mehrere Radarsensoren und/oder einen oder mehrere Ultraschallsensoren und/oder einen oder mehrere Lidar-Sensoren und/oder einen oder mehreren Lasersensoren und/oder eine oder mehre Lichtschranken und/oder einen oder mehrere Türöffnungssensoren.

Nach einer Ausführungsform ist vorgesehen, dass eine abzufahrende Route oder ein zu fahrender Weg des Fahrzeugs abgesperrt oder gesichert wird. Dadurch kann insbesondere der technische Vorteil bewirkt werden, dass der zu fahrende Weg menschenleer sein kann.

## Patentansprüche

1. Verfahren zum Betreiben eines Fahrzeugs (301), wobei das an einer Parkposition eines Parkplatzes abgestellte Fahrzeug (301) autonom von der Parkposition zu einer Beladestation geführt (101, 205) und an der Beladestation autonom abgestellt (103, 207) wird, so dass das Fahrzeug (301) an der Beladestation beladen werden kann, **dadurch gekennzeichnet, dass** das Fahrzeug (301) nach einem Beladen autonom zurück zur gleichen Parkposition oder zu einer anderen Parkposition des Parkplatzes geführt (209) und dort autonom abgestellt (211) wird.

2. Verfahren nach Anspruch 1, wobei das beladene und an der entsprechenden Parkposition abgestellte Fahrzeug (301) nach einem Ende einer vorbestimmten Parkzeit und/oder nach Empfang eines Startsignals über ein Kommunikationsnetzwerk autonom von der entsprechenden Parkposition zu einer Zielposition des Parkplatzes geführt und dort autonom abgestellt wird, an welcher das Fahrzeug (301) von einer Person abgeholt werden kann.

3. Verfahren nach einem der vorherigen Ansprüche, wobei das Fahrzeug (301) autonom von einer Startposition des Parkplatzes zu der Parkposition geführt (201) und dort autonom abgestellt (203) wird, bevor es von der Parkposition autonom zu der Beladestation geführt wird.

4. Verfahren nach einem der vorherigen Ansprüche, wobei das Fahrzeug (301) erst dann autonom zu der Beladestation geführt wird, wenn über ein Kommunikationsnetzwerk ein entsprechendes Anforderungssignal empfangen wird.

5. Verfahren nach Anspruch 4, wobei das Anforderungssignal vom Fahrzeug (301) und/oder von einem Parkplatzserver zum Koordinieren von autonomen Fahrten von Fahrzeugen (301) auf dem Parkplatz empfangen wird.

6. Verfahren nach Anspruch 5, wobei der Parkplatzserver ansprechend auf den Empfang des Anforderungssignals eine autonome Führung des Fahrzeugs (301) von der Parkposition zu der Beladestation koordiniert.

7. Verfahren nach einem der vorherigen Ansprüche, wobei das autonome Führen des Fahrzeugs (301) eine ferngesteuerte Führung des Fahrzeugs (301) umfasst.

8. Verfahren nach einem der vorherigen Ansprüche, wobei das autonome Führen des Fahrzeugs (301) ein Steuern einer Quer- und/oder Längsführung des Fahrzeugs (301) mittels einer fahrzeuginternen Steuerungseinrichtung umfasst.

9. Verfahren nach einem der vorherigen Ansprüche, wobei der Parkplatz einem Kaufhaus zugeordnet ist, in welchem Handelsware eingekauft werden kann, so dass an der Beladestation eingekaufte Handelsware in das Fahrzeug (301) beladen werden können.

10. Fahrzeug (301), das eingerichtet ist, das Verfahren nach einem der vorherigen Ansprüche durchzuführen.

11. Computerprogramm, umfassend Programmcode zur Durchführung des Verfahrens nach einem der Ansprüche 1 bis 9, wenn das Computerprogramm auf einem Computer ausgeführt wird.

## Claims

1. Method for operating a vehicle (301), wherein the vehicle (301) parked at a parking position in a car park is autonomously guided (101, 205) from the parking position to a loading station and is autonomously parked (103, 207) at the loading station, with the result that the vehicle (301) can be loaded at the loading station, **characterized in that**, after loading, the vehicle (301) is autonomously guided (209) back to the same parking position or to another parking position in the car park and is autonomously parked (211) there.

2. Method according to Claim 1, wherein, after an end of a predetermined parking time and/or after receiving a starting signal via a communication network, the loaded vehicle (301) parked at the corresponding parking position is autonomously guided from the corresponding parking position to a target position in the car park and is autonomously parked there, at which target position the vehicle (301) can be collected by a person.

3. Method according to one of the preceding claims, wherein the vehicle (301) is autonomously guided (201) from a starting position in the car park to the parking position and is autonomously parked (203) there before it is autonomously guided from the parking position to the loading station.

4. Method according to one of the preceding claims, wherein the vehicle (301) is only autonomously guided to the loading station when a corresponding request signal is received via a communication network.

5. Method according to Claim 4, wherein the request signal is received by the vehicle (301) and/or by a car park server for coordinating autonomous journeys of vehicles (301) in the car park.

6. Method according to Claim 5, wherein the car park server coordinates autonomous guidance of the vehicle (301) from the parking position to the loading station in response to the reception of the request signal.

7. Method according to one of the preceding claims, wherein the autonomous guidance of the vehicle (301) comprises remote-controlled guidance of the vehicle (301).

8. Method according to one of the preceding claims, wherein the autonomous guidance of the vehicle (301) comprises controlling lateral and/or longitudinal guidance of the vehicle (301) by means of a control device inside the vehicle.

9. Method according to one of the preceding claims, wherein the car park is assigned to a department store in which commodities can be purchased, with the result that purchased commodities can be loaded into the vehicle (301) at the loading station.

10. Vehicle (301) which is configured to carry out the method according to one of the preceding claims.

11. Computer program comprising program code for carrying out the method according to one of Claims 1 to 9 when the computer program is executed on a computer.

## Revendications

1. Procédé pour faire fonctionner un véhicule (301), selon lequel le véhicule (301) stationné sur une position de stationnement d'un parking est guidé (101, 205) de manière autonome de la position de stationnement à une station de charge et est stationné (103, 207) de manière autonome à la station de la charge, de sorte que le véhicule (301) peut être chargé à la station de la charge, **caractérisé en ce qu'**après la charge, le véhicule (301) est guidé (209) de manière autonome de retour à la même position de stationnement ou vers une autre position de stationnement du parking et y est stationné (211) de manière autonome.

2. Procédé selon la revendication 1, selon lequel le véhicule chargé (301) et stationné à la position de stationnement correspondante, après la fin d'une période de stationnement prédéterminée et/ou après réception d'un signal de démarrage par l'intermédiaire d'un réseau de communication, est guidé de manière autonome de la position de stationnement correspondante à une position cible du parking, à laquelle le véhicule (301) peut être récupéré par une personne, et y est stationné de manière autonome.

3. Procédé selon l'une des revendications précédentes, selon lequel le véhicule (301) est guidé (201) de manière autonome d'une position de départ du parking à la position de stationnement et y est stationné de manière autonome (203) avant d'être guidé de manière autonome de la position de stationnement à la station de charge.

4. Procédé selon l'une des revendications précédentes, selon lequel le véhicule (301) n'est guidé de manière autonome vers la station de charge que lorsqu'un signal de demande correspondant est reçu par l'intermédiaire d'un réseau de communication.

5. Procédé selon la revendication 4, selon lequel le signal de demande est reçu par le véhicule (301) et/ou par un serveur de parking destiné à coordonner des déplacements autonomes de véhicules (301) dans le parking.

6. Procédé selon la revendication 5, selon lequel, en réponse à la réception du signal de demande, le serveur de parking coordonne le guidage autonome du véhicule (301) de la position de stationnement à la station de charge.

7. Procédé selon l'une des revendications précédentes, selon lequel le guidage autonome du véhicule (301) comprend le guidage télécommandé du véhicule (301).

8. Procédé selon l'une des revendications précédentes, selon lequel le guidage autonome du véhicule (301) comprend la commande d'un guidage transversal et/ou longitudinal du véhicule (301) au moyen d'un dispositif de commande interne au véhicule.

9. Procédé selon l'une des revendications précédentes, selon lequel le parking est associé à un grand magasin dans lequel des marchandises peuvent être achetées, de sorte que les marchandises achetées à la station de charge peuvent être chargées dans le véhicule (301).

10. Véhicule (301), conçu pour mettre en œuvre le procédé selon l'une des revendications précédentes.

11. Programme informatique comprenant un code de programme permettant de mettre en œuvre le procédé selon l'une des revendications 1 à 9 lorsque le programme informatique est exécuté sur un ordinateur.
